# EUROPEAN PATENT APPLICATION

(11) **EP 1 643 683 A2**
(43) Date of publication of application: **05.04.2006**
(21) Application number: 05108931.6
(22) Date of filing: 27.09.2005
(51) Int. Cl.: H04L 12/26

(54) **Monitoring traffic in a packet switched network**

(30) Priority: 01.10.2004 GB 0421797
(71) Applicant: Agilent Technologies, Palo Alto, CA 94303-0870 (US)
(72) Inventor: Mitchell, Kevin, Agilent Technologies UK Ltd., South Queensferry, Lothian EH30 9TG (GB)
(74) Representative: Coker, David Graeme

(57) **Abstract**

In an MPLS network (100), one or more monitoring probes (10, 20) are arranged to monitor data traffic on a particular path formed of several links (50) in the network. The monitoring information from the probes (10, 20) is then sent to a Network Management module (110) via links (70) in a path through the network (100) that avoids, so far as possible, any links (50) in the path being monitored, as well as any links (60) in paths that are considered to be important due to having high priority or that would be adversely affected by the additional monitoring information.

## Description

The present invention relates to a method and apparatus for monitoring traffic in a packet switched communication network, especially, though not exclusively, for monitoring traffic in a Multi Protocol Label Switching (MPLS) packet switched communication network.

### Background of the Invention

MPLS is used in packet-switched communication networks, specifically in Asynchronous Transfer Mode (ATM) and Internet Protocol (IP) networks to provide additional applications, allowing for improved customer services. MPLS was originally developed to enhance performance and network scalability by making use of special "link layer" technologies. A working group within IETF (Internet Engineering Task Force) does standardization work on this topic, which is documented in "Requests for Comment" (RFCs).

In a packet switched network, as is well known, packets of data are routed over a plurality of links from a start point to an end point. The links are coupled together by routers which receive the packets and decide on which link to send the packet depending on various factors, including, of course, the destination point of the packet. However, the router can also decide how to route the particular packet based on traffic on the links and, in some case, on the priority of the particular packet of data. In an MPLS network, on the other hand, a particular incoming packet is assigned a "label" by a Label Edge Router (LER) at the beginning of the packet's route through the network or through a particular region of the network. The label assigned to the packet provides information as to a particular route the packet is to take through the network. Packets are thus forwarded along a Label Switch Path (LSP), from one Label Switch Router (LSR) to the next, with each LSR making forwarding decisions based solely on the contents of the label. At each "hop" the LSR strips off the existing label and applies a new label which tells the next LSR how to forward the packet. The labels are distributed between nodes that comprise the network using a Label Distribution Protocol (LDP). LSP's may be established with specific metrics, such as link bandwidth, holding priority etc.

RFC 3031 specifies the Architecture of an MPLS network and defines that more than one protocol for distributing labels can be used, such as Reservation Protocol for LSP Tunnel Extensions (RSVP-TE) and Constraint-based Routing Label Distribution Protocol (CR-LDP). CR-LDP is a set of extensions to LDP specifically designed to facilitate constraint based routing of Label Switched Paths (LSPs). CR-LDP is further defined in RFCs 3212, 3213 and 3214.

Since the traffic that flows along a label-switched path is defined by the label applied at the ingress node of the LSP, these paths can be treated as tunnels, tunnelling below normal IP routing and filtering mechanisms. When an LSP is used in this way it is referred to as an LSP tunnel.

LSP tunnels allow the implementation of a variety of policies related to network performance optimization. For example, LSP tunnels can be automatically or manually routed away from network failures, congestion, and bottlenecks. Furthermore, multiple parallel LSP tunnels can be established between two nodes, and traffic between the two nodes can be mapped onto the LSP tunnels according to local policy.

Traffic engineering is required to make efficient usage of available network resources. However, in order to be able to engineer, i.e. route the traffic dynamically, knowledge of traffic already on the network, and of any problems that might exist, such as network failures, congestion, and bottlenecks, must be obtained. One way of doing so is to monitor links in the MPLS network so as to try to ensure that particular LSPs meet pre-defined Quality of Service (QoS) and Service Level Agreements (SLA's).

To calculate delay and loss measures for data traffic crossing a particular link or set of links in the network requires measurements at at least two points. The properties of particular distinguished packets need to be identified and measured at an ingress router and then these same packets are analyzed as they pass through the egress router. To calculate packet delay and loss rates then requires a correlation phase at a Network Management Station (NMS). Computed data from the ingress probe must be matched up with data from the egress probe. If the probes can communicate out-of-band, i.e. there is a separate monitoring network for transporting this data, then the correlation traffic will not disturb the network under test. However this wastes valuable network resources, particularly if such measurements are only made intermittently and so the monitoring network is unused for much of the time. The correlation traffic could be sent over the main network, but this risks perturbing the network, invalidating the measurements, and potentially violating various SLAs. The extent of the problem depends on the required accuracy of the measurements. If very frequent and accurate measurements of loss and delay are required then this will generate large amounts of correlation traffic, and the effect on the network will become non-negligible.

Although it is known, for example in ATM networks, to use dedicated out-of-band monitoring networks, this is inefficient, complicated and expensive.

### Brief Summary of the Invention

The present invention therefore seeks to provide a method and apparatus for monitoring a packet switched communications network, which overcomes, or at least reduces the above-mentioned problems of the prior art.

Accordingly, in a first aspect, the invention provides a monitoring system for monitoring a packet switched communications network, the network comprising a plurality of communication links coupled by routers for routing data packets via particular communication links through the network, the system comprising at least one monitoring probe arranged to monitor a first communication link, a network management module for receiving monitoring information from the monitoring probe relating to particular data packets on the communication link, wherein the monitoring information is routed through the packet communications network to the network management module along a path that avoids the communication link being monitored so far as possible.

The monitoring system may further comprise a second monitoring probe arranged to monitor a second communications link, the first and second communications links forming at least part of a communications path being monitored, wherein the monitoring information is routed through the packet communications network to the network management module along a path that avoids the communications path being monitored so far as possible.

In one embodiment, the network management module comprises a correlator for correlating the monitoring information from the monitoring probes to determine measurements of quality of packet flow along the communications path being monitored.

The path along which the monitoring information is routed through the packet communications network to the network management module may comprise communication links that are considered to be less needed for important packet traffic than other links.

In one embodiment, the monitoring system further comprises a path determining element for determining the path along which the monitoring information is routed through the packet communications network to the network management module.

The path determining element may comprise the monitoring probe from which the monitoring information originates, or the network management module, or a router adjacent the monitoring probe from which the monitoring information originates.

The path determining element may comprise a receiver for receiving information regarding important communication links in the communications network and a memory for storing the information, the path determining element determining the path along which the monitoring information is routed through the packet communications network to the network management module based on the information so as to minimise the use of the important communication links so far as possible.

The important communication links may include one or more of communication links that are being monitored, communication links that are designated as having a high priority, and/or communication links that have high traffic.

In one embodiment, the information regarding important communication links in the communications network includes a cost assigned to each link, and the path determining element determines the path along which the monitoring information is routed through the packet communications network based on the assigned costs,.

According to second aspect, the invention provides a method for monitoring a packet switched communications network, the network comprising a plurality of communication links coupled by routers for routing data packets via particular communication links through the network, the method comprising the steps of monitoring a first communication link and generating monitoring information relating to particular data packets on the first communication link, and routing the monitoring information through the packet communications network to a network management module along a path that avoids the communication link being monitored so far as possible.

The method may further comprise the step of correlating the monitoring information from a plurality of monitoring probes to determine measurements of quality of packet flow along a communications path being monitored.

The step of routing the monitoring information through the packet communications network may comprise determining a path that uses communication links that are considered to be less needed for data traffic than other links.

The step of routing the monitoring information through the packet communications network may comprise the steps of receiving information regarding important communication links in the communications network, and determining the path along which the monitoring information is routed through the packet communications network to the network management module based on the information so as to minimise the use of the important communication links so far as possible.

The method may further comprise the step of assigning a cost to each communications link and wherein the step of determining the path along which the monitoring information is routed through the packet communications network is based on the assigned costs

The packet switched network may be an MPLS network.

It should be appreciated that the packet switched communications network comprising a plurality of communication links coupled by routers for routing data packets via particular communication links through the network forms a network, or part of a network in which the data packets are customer data packets and are not data packets containing signalling or monitoring information. In other words, the apparatus or method for monitoring paths or links in the network, routes the monitoring information packets along paths or links in the "main" network carrying customer data traffic and does not utilise out-of-band links or a separate network for routing the monitoring traffic.

### Brief Description of the Drawings

One embodiment of the invention will now be more fully described, by way of example, with reference to the drawings, of which:
FIG. 1 shows an overview of an MPLS network being monitored according to one embodiment of the present invention;
FIG. 2 shows a schematic diagram of the Network Management Station (NMS), according to one embodiment of the present invention;
FIG. 3A shows a flow diagram illustrating steps A1 to A5 required to perform the traffic engineering of a MPLS monitoring network according to one embodiment of the present invention;
Fig. 3B shows a flow diagram illustrating steps A6 to A13 required to perform the traffic engineering of a MPLS monitoring network according to one embodiment of the present invention.

### Detailed Description of the Drawings

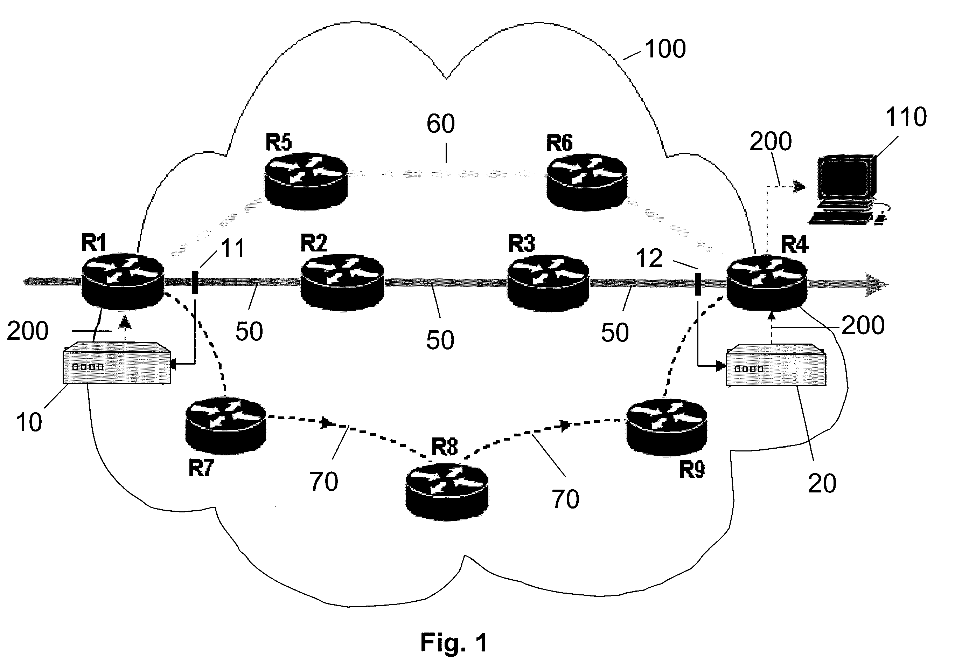

In a brief overview of one embodiment of the present invention, there is shown in Figure 1 an MPLS network 100 which includes router labelled R1-R8 having various links 50, 60, 70 between them. Each link extends between two routers, with a path through the network generally being formed of one or more links extending from a start router (or other element) to an end router (or other element). A Network Management Station (NMS) 110, is coupled at some point to the network to provide network management functions, including providing information regarding the quality of paths through the network that are being monitored. In this embodiment, two monitoring probes 10, 20 perform measurements and send the measurements to the NMS 110.

A single LSP under observation, in this case formed by the three links 50, is routed across the MPLS network 100, from router R1 to router R4. The NMS 110 correlates the results from the first probe 10 and the second probe 20 and is connected to router R4 at the egress of the LSP under observation.

The two probes 10, 20 use taps 11, 12 to connect into the two links 50 forming the LSP under observation adjacent routers R1 and R4, which are typically located at the ingress and egress router nodes for the LSP. The probes 10, 20 monitor the packets that go by. Whenever a packet is observed that matches specific criteria relating to the measurements of interest, the time that the packet is observed (and, possibly, other data relating to the packet) is recorded and the information is sent to the NMS 110. The probe may batch up these results, sending multiple results in a single packet to reduce network overhead.

The monitoring data measured by the probes is sent to the nearest router in order to be transferred via the network to the NMS. It should be noted that, as used herein, the network may comprise part of a larger network, but comprises links that are used for data traffic flow and does not include links that are used exclusively for signaling or monitoring traffic. Thus, as shown in Fig. 1, the monitoring data from the probes 10, 20 is sent to the nearest router as a signal 200. In the case of probe 10, the nearest router is R1, whereas, in the case of probe 20, the nearest router is R4.

In the present embodiment, the NSM is co-located with the router R4, so that the monitoring data from probe 20 does not need to pass through the network to reach the NMS. However, the monitoring data from probe 10 must be transmitted from router R1 via the network to router R4. The simplest approach would be to send it using the LSP from R1->R2->R3->R4. However, this is the LSP under observation, so the measurements being made of the traffic on this LSP would be disturbed by sending the measurement traffic on this path. Although, if there is only a little monitoring traffic, then the disturbance may not be great, probes can generate a lot of traffic if they are monitoring many LSPs simultaneously, or sending samples of the observed traffic to the NMS 110, for example. To avoid causing such a disturbance, the LSP from R1->R5->R6->R4 could be used. In this example, such a route would minimize disruption to the measurements being taken on the LSP under observation. Even so, it may not eliminate it entirely, as the router nodes R1 and R4 would still be carrying additional traffic, which may be observable in some cases. However, using R1->R5->R6->R4 might be undesirable for other reasons, for example if it is carrying important traffic with very strict bounds on packet loss and delay. Thus, in this embodiment the monitoring traffic is routed along the longer path R1->R7->R8->R9->R4 so as to avoid both the path being monitored and more important links 60.

In the general case there may be a large set of LSPs under observation, all with known routes. There may also be a large set of LSPs that need to be avoided, even though they aren't being currently monitored. For simplicity in this embodiment there is a single NMS 110 in the MPLS network 100, although a person skilled in the art would appreciate that there could be more.

The path being used for the monitoring traffic R1->R7->R8->R9->R4, may require that a new LSP be constructed (in the sense of being determined from existing links) explicitly for this task, or it may utilise an LSP already in existence that follows the required route. In this case an additional LSP does not need to be constructed; the existing one is either used unmodified or extra bandwidth could be provisioned to take into account the monitoring traffic.

Furthermore, the NMS 110 may be remote from both probes 10, 20, requiring the establishment of LSPs from both probes 10, 20. Furthermore, other probes may be being used in the MPLS network 100 at the same time, for example monitoring an LSP from R6 to R8, so as can be appreciated by someone skilled in the art the traffic engineering of the monitoring network will be much more complex in practice.

Although in this embodiment, the probes have links to their adjacent routers, this is not essential, and they may be coupled to any convenient router.

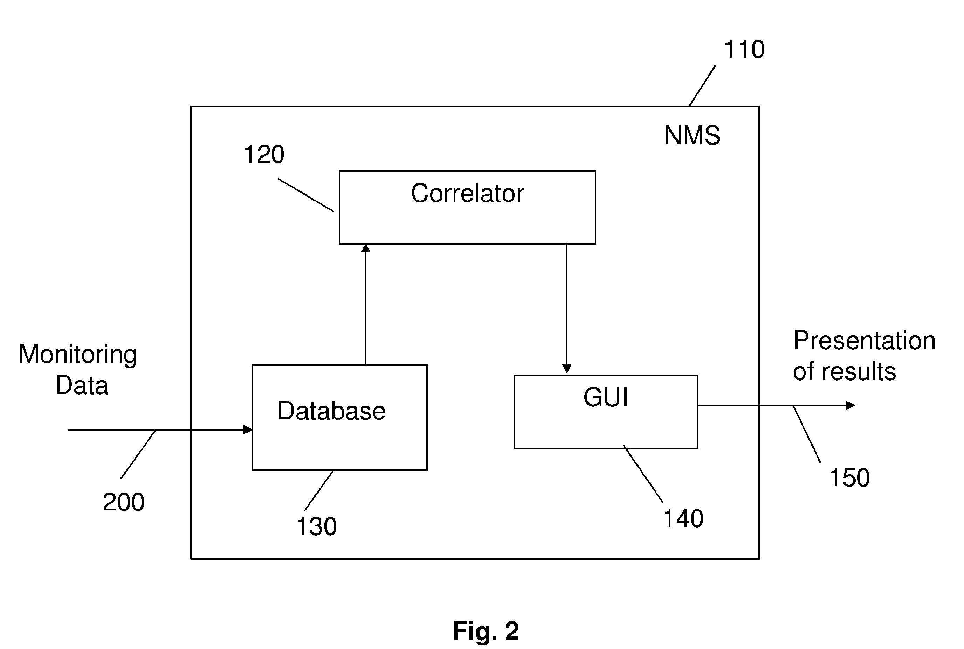

Figure 2 shows a simplified schematic diagram of a NMS 110, which includes a correlator 120, a database 130 which stores measurements and results and a Graphical User Interface (GUI) 140, which displays the measurements and or results. The monitoring data 200 from some or all the probes in the MPLS network 100 is sent to the NMS 110 as described above with reference to Figure 1.

The correlator 120, on reception of packets from both probes 10, 20, will attempt to match up the results from these probes 10, 20 to calculate one-way delay and packet loss over time of the LSP under observation.

The results may be presented on the GUI 140 of the NMS, and/or they may be provided at an output 150 of the NMS to the network operator for further processing and/or storage elsewhere.

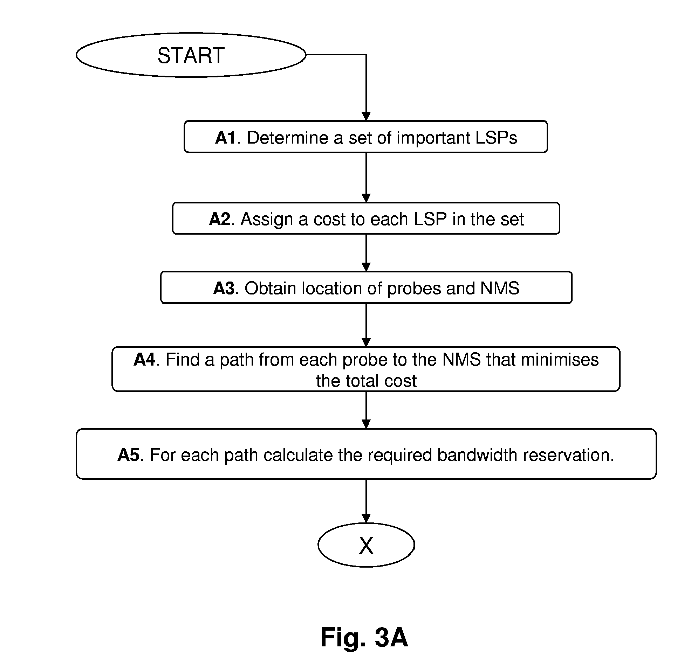

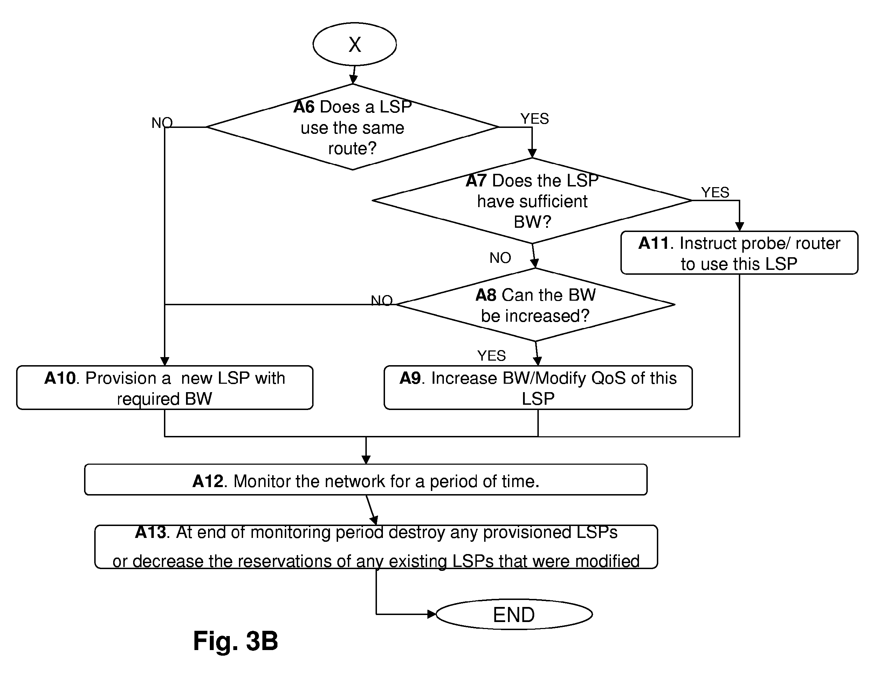

Figures 3A and 3B show a flow diagram illustrating steps A1 to A13 for performing traffic monitoring of an MPLS monitoring network according to one embodiment of the present invention. The steps are described in further detail below:

The traffic monitoring process starts at "START".

**Step A1.** Determine a set of important LSPs. These include the LSPs to be monitored, but may also include additional important LSPs, whose performance should not be degraded by the addition of monitoring traffic, if possible, even though they are not being monitored.

A2. Assign a cost to each LSP in the set. Assume that the routes used by all the LSPs in the set are known. This information is used to assign a cost to each link. For example, an additive cost could be used, where if n LSPs in the set traverse a link then the cost associated with this link is n. However, the costs may be weighted, putting more emphasis on LSPs with higher priority, or links with smaller capacity, for example. The cost for any link not used by elements of the set is taken to be 0. The cost function may be any known cost function.

A3. Obtain the location of the probes and the NMS. There may be many probes deployed, but only those that will generate measurement traffic during the monitoring period are of interest. In this embodiment it is assumed that the probes are placed on links adjacent to a router, and inject their measurement packets into this router. The probe's location is taken to be this router. Similarly, the location of the NMS is taken to be the egress router that is traversed to reach this NMS, i.e. the last router within the MPLS network that is traversed when sending packets to the NMS. In many cases the NMS will be connected directly to one of the routers within the MPLS network, and in this case the location of the NMS is clear.

**A4.** Use a multi-commodity flow optimization technique, such as that described in "Algorithms for Flow Allocation for Multi-Protocol Label Switching", by Ott, et al, of Telecordia Technologies Inc, presented at MPLS2000 International Conference, Fairfax, Virginia, in October 2000, to find a route from each probe location to the NMS that minimizes the total cost. Again, the exact cost function is not important, but if a route from a probe to the NMS traverses a link with cost c, then this cost should be reflected in the total cost of the solution. Thus, minimizing the total cost has the effect of moving the monitoring traffic away from the paths being used by the LSPs in the set of important LSPs, to the extent to which this is possible. In many cases some of the links with non-zero cost cannot be avoided entirely, as the network may not have sufficient alternative routes to avoid this.

Another approach is to manipulate existing MPLS routing constraints, such as LSP tunnel resource affinities (as defined in RFC 2702, RFC 3346), to select a suitable route. Each link could be coloured according to priority. Low priority links for best-effort traffic and monitoring traffic could then be used.

It should be noted here that the use of an online approach, e.g. using CR/LDP or RSVP-TE, only routes one LSP at a time, with only local knowledge, so that the route will only be optimal locally. The use of multi-commodity optimization is more desirable since it would find routes that minimise the costs globally. So, for example, CR/LDP might have a choice of routes that both look equally good from a local perspective, but, using the multi-commodity approach would discriminate between choosing one route that may then make it very costly to route remaining LSP's whereas choosing the second route might allow the remaining LSP's to be routed at lower cost.

Although either technique will be sufficient in many cases, a probe might also collaborate with other probes to find suitable routes, in conjunction with topology information gleaned from the network.

The result of this step A4 will be a path from each probe location to the management station that minimizes the disruption to the LSPs in the set.

A5. For each path from a Probe P to a NMS M, with an associated Route R, calculate the required bandwidth reservation.

The process described in Figure 3A exits at point X and restarts at point X in Figure 3B.

**A6.** Check if an LSP already exists that follows route R. If Yes, move to step A7, if NO, move to step A10.

**A7.** If there is an LSP that already follows route R, then check if the LSP has sufficient bandwidth and QoS reservation. If YES, then move to step A11, if no, then move to step A8.

A8. If an LSP already exists, check whether the current bandwidth reservation/QoS capability is sufficient to support the monitoring traffic. If YES, then move to step A9, if NO then move to step A10.

A9. The bandwidth reservation or QoS capability of the LSP is increased or modified for the duration of the optimization period.

A10. A new LSP is provisioned with the required bandwidth/QoS for the probe's traffic, using path R.

A11. If the LSP has sufficient bandwidth reservation then the probe, and/or its router, is instructed to use this LSP.

A12 Monitor the network for some period of time, using the monitoring LSPs to convey the monitoring measurements back to the management station.

A13. At the end of the monitoring period destroy any LSPs created to support the probe traffic or decrease the reservations of any existing LSPs that were modified to support this traffic.

The process as described in Figure 3B exits at "END".

Although, of course, Monitoring LSPs could be configured for each pair of ingress and egress probes when each probe is deployed, this would tie up valuable router states and most of these LSPs would be unused for much of the time. It may therefore be preferable to create suitable LSPs on demand.

So far, it has been assumed that the routes from each probe to each NMS are fixed. In practice, routes may change, e.g. due to link failures, or additional LSPs being provisioned. Two options can be envisaged, either to leave the provisioned monitoring LSP as is, wherein the monitoring traffic may have more of an impact on an important LSP. Alternatively, the optimization/provisioning process (steps A4 and A5) is rerun when the routes change substantially, to give the system an opportunity to reroute the probe traffic somewhere else.

The process as described in Figures 3A and 3B has been described as a batch version, where the important LSPs, and probe locations, are described in advance of the optimization step A4. The same approach could be used where the set of important LSPs, and the probes, change incrementally, as the set of LSPs to be monitored changes over time. Whilst the bookkeeping necessary to support such an incremental variant is non-trivial, the essence of the technique is the same in both cases.

For simplicity it has also been assumed that there are no multiple egress routers that are able to forward packets to the NMS. It should be appreciated by a person skilled in the art that relaxing this constraint complicates the optimization step, but could be carried out without departing from the scope of the invention as defined by the following claims.

Thus it can be seen that the above described embodiment of the present invention serves to mitigate the problems of the prior art by providing an apparatus and method to allow network operators to choose a route that keeps the traffic away from the nodes and links used by the LSP(s) under test, or at least minimise their use. Furthermore, nodes that were not under test, but that formed part of the path for other LSPs that have stringent SLA requirements can be avoided. Network operators can thus use routes from the probes to the NMS that minimise use of the links being used for the observed and important LSPs, so far as possible.

It will be appreciated that although only one particular embodiment of the invention has been described in detail, various modifications and improvements can be made by a person skilled in the art without departing from the scope of the present invention.

## Claims

1. A monitoring system for monitoring a packet switched communications network, the network comprising a plurality of communication links coupled by routers for routing data packets via particular communication links through the network, the system comprising at least one monitoring probe arranged to monitor a first communication link, a network management module for receiving monitoring information from the monitoring probe relating to particular data packets on the communication link, wherein the monitoring information is routed through the packet communications network to the network management module along a path that avoids the communication link being monitored so far as possible.

2. A monitoring system according to claim 1, further comprising a second monitoring probe arranged to monitor a second communications link, the first and second communications links forming at least part of a communications path being monitored, wherein the monitoring information is routed through the packet communications network to the network management module along a path that avoids the communications path being monitored so far as possible.

3. A monitoring system according to claim 2, wherein the network management module comprises a correlator for correlating the monitoring information from the monitoring probes to determine measurements of quality of packet flow along the communications path being monitored.

4. A monitoring system according to any preceding claim, wherein the path along which the monitoring information is routed through the packet communications network to the network management module comprises communication links that are considered to be less needed for important packet traffic than other links.

5. A monitoring system according to claim 4, further comprising a path determining element for determining the path along which the monitoring information is routed through the packet communications network to the network management module.

6. A monitoring system according to claim 5, wherein the path determining element comprises any of: the monitoring probe from which the monitoring information originates; or the network management module; or a router adjacent the monitoring probe from which the monitoring information originates.

7. A monitoring system according to claim 5 or claim 6, wherein the path determining element comprises a receiver for receiving information regarding important communication links in the communications network and a memory for storing the information, the path determining element determining the path along which the monitoring information is routed through the packet communications network to the network management module based on the information so as to minimise the use of the important communication links so far as possible.

8. A monitoring system according to claim 7, wherein the important communication links include one or more of:
communication links that are being monitored;
communication links that are designated as having a high priority;
communication links whose utilisation would be adversely affected by the additional monitoring information.

9. A monitoring system according to either claim 7 or claim 8, wherein the information regarding important communication links in the communications network includes a cost assigned to each link, and wherein, the path determining element determines the path along which the monitoring information is routed through the packet communications network based on the assigned costs,.

10. A monitoring system according to any preceding claim, wherein the packet switched communications network is an MPLS network.

11. A method for monitoring a packet switched communications network, the network comprising a plurality of communication links coupled by routers for routing data packets via particular communication links through the network, the method comprising the steps of:
monitoring a first communication link and generating monitoring information relating to particular data packets on the first communication link, and
routing the monitoring information through the packet communications network to a network management module along a path that avoids the communication link being monitored so far as possible.

12. A method according to claim 11, further comprising the step of:
correlating the monitoring information from a plurality of monitoring probes to determine measurements of quality of packet flow along a communications path being monitored.

13. A method according to either claim 11 or claim 12, wherein the step of routing the monitoring information through the packet communications network comprises determining a path that uses communication links that are considered to be less needed for important packet traffic than other links.

14. A method according to any one of claims 11 to 13, wherein the step of routing the monitoring information through the packet communications network comprises the steps of:
receiving information regarding important communication links in the communications network; and
determining the path along which the monitoring information is routed through the packet communications network to the network management module based on the information so as to minimise the use of the important communication links so far as possible.

15. A method according to either claim 13 or claim 14, further comprising the step of assigning a cost to each communications link and wherein the step of determining the path along which the monitoring information is routed through the packet communications network is based on the assigned costs.

16. A method according to any one of claims 11 to 15, wherein the packet switched network is an MPLS network.
